# NEW EUROPEAN PATENT SPECIFICATION

(11) **EP 2 360 068 B2**
(45) Date of publication and mention of the opposition decision: **30.08.2017**
(45) Mention of the grant of the patent: 09.04.2014
(21) Application number: 09179018.8
(22) Date of filing: 14.12.2009
(51) Int. Cl.: B60R 21/34

(54) **Vehicle airbag system**
Airbagsystem für ein Fahrzeug
Système d'airbag de véhicule

(43) Date of publication of application: 24.08.2011
(73) Proprietor: Volvo Car Corporation, 405 31 Göteborg (SE)
(72) Inventor: von Eichwald, Tor, 422 43, Hisings Backa (SE); Bergenheim, Eddy, 426 69, Västra Frölunda (SE); Erlingfors, Mats, 44465, Jörlanda (SE)
(74) Representative: Valea AB

(56) References cited:
- EP-A1- 2 036 782
- EP-A1- 2 360 068
- EP-A2- 1 652 740
- EP-A2- 1 992 526
- EP-A2- 1 992 526
- EP-B1- 1 475 276
- JP-A- 2004 168 111
- JP-A- 2004 299 442
- JP-A- 2006 044 322
- JP-A- 2006 205 934
- JP-A- 2006 219 046
- JP-A- 2006 347 419
- JP-A- 2007 076 542

## Description

### TECHNICAL FIELD

The present invention relates to an airbag system for a vehicle comprising at least one stabilization member. The invention further relates to a use of at least one stabilization member for sideways stabilization of a deploying/deployed airbag and the use of at least one stabilization member for pulling back a deployed airbag.

### BACKGROUND OF THE INVENTION

If a vehicle, such as a car, is involved in an accident, in which the front part of the vehicle hits a pedestrian or a cyclist, the pedestrian/ cyclist may be thrown towards the windscreen and/or the A-pillars. In order to reduce the severity of these accidents, it is well-known to use an inflatable airbag, which deploys and at least partly covers the windscreen and/or the A-pillars, so that the pedestrian/ cyclist instead hits the softer airbag.

During normal conditions, the inflatable airbag is stored in a housing under the bonnet of the vehicle. However, when a sensor system in the vehicle detects a potential collision risk with for example a pedestrian or cyclist, the airbag is deployed, i.e. inflated, in order to at least partly cover the windscreen and/or the A-pillars.

Document US 2006/0151228 A1 discloses an airbag system for protecting pedestrians and cyclists. The airbag is deployable to protect a pedestrian or a cyclist who strikes the vehicle. To prevent the lateral displacement of the segments of the deployed airbag in front of the A-pillars of the vehicle, the airbag, which is deployed from below the bonnet, includes a section or a chamber near the hinges of the bonnet. As a result, the airbag is deployable above the bonnet along the entire width of the vehicle in front of the lower area of the windscreen and the A-pillars. The lateral ends of the airbag extend over the A-pillars in such a way that they are upwardly oriented and are additionally fixed by a restraining member after deployment.

However, the suggested airbag of US 2006/0151228 A1 has a rather complicated shape, in particular due to the section or a chamber near the hinges of the bonnet. The illustrated restraining members risk getting tangled during deployment. There is also a risk that an impacting pedestrian/ cyclist can get stuck in the restraining member and thereby get hurt.

Document EP 1 992 526 discloses an airbag system according to the preamble of claim 1 and also the use of such an airbag according to the preamble of claims 12 and 14.

### SUMMARY OF THE INVENTION

The object of the present invention is to provide an improved airbag system, which is able to provide sideways stabilization of a deploying, or a deployed airbag, and is easy to manufacture and provides a safe attachment of the stabilization member to the airbag.

It is desirable to provide a less complicated airbag system as compared to the airbag systems used today, which yet can reduce the risk for sideways displacement of the airbag. It is especially desirable that the airbag should stay in place, even if the pedestrian/ cyclist impacts from an oblique angle.

It is further desirable to reduce the risk that an impacting pedestrian/ cyclist can get stuck in a restraining member, which keeps the deployed airbag in place, and thereby get hurt.

The object above may be achieved by the invention according to claim 1, 12 and/or 14.

In a first aspect of the present invention there is provided an airbag system for a vehicle according to claim 1.

Since the at least one stabilization member is attached to the lower region of the airbag, a shorter stabilization member may be used as compared to the case where the stabilization member is attached to the lateral ends of the airbag. A shorter stabilization member means that less material is needed and it is therefore cheaper and weighs less. It will need less space when being stored. The risk that the stabilization member is tangled during deployment of the airbag is reduced. The risk that an impacting pedestrian/ cyclist gets stuck in a stabilization member and thereby gets hurt is also reduced.

The stabilization member is thus, according to the invention, not attached to a lateral end of the airbag, nor in the vicinity of the lateral end. Instead it is attached a lower edge of the airbag outside of the inflating channel. It has previously been believed that the stabilization members should be attached at the lateral ends of the airbag to give the desired stabilization effect, but the inventors have found, that the stabilization effect also may be achieved by attaching the stabilization member to the lower region of the airbag.

In case the pedestrian/cyclist impacts with the airbag, and especially if he/she hits at an oblique angle, the stabilization members will keep the airbag in the intended position, wherein it at least partly covers the windscreen and/or the A-pillars of the vehicle. If no stabilization members were used, the airbag would risk being pushed out of position. The stabilization members are further useful during deployment of the airbag in order to facilitate the deployment. The stabilization members also prevent the airbag from riding up on the bonnet.

The terms front, rear and sideways used herein refer to the vehicle. Further, terms regarding the airbag like lateral ends of the airbag, lower region, lower edge etc as well as measures refer to the airbag in its deployed state.

The lower region is the region of the deployed airbag situated below an imaginary line L in lateral direction going through the deployed airbag at half of its height h at the centre line.

As an alternative, the stabilization member may be attached to the region of the airbag located between the lower edge of the airbag and a quarter of its height, or to the region of the airbag located between the lower edge of the airbag and an eighth part of its height.

The other end of the stabilization member, i.e. the end not being attached to the airbag, may be attached to the housing or the vehicle. If attached in the vehicle, the attachment point may be to the bonnet, the engine compartment or to the plenum area.

Any number of stabilization members may be used, such as one, two, three, four or five. For symmetry reasons, it is generally preferred to use the same number of stabilization members for each half of the airbag, but the number may also differ. When using more than one stabilization member at a half of the airbag, the attachment points may vary for one or both ends of the stabilization members. Purely as an example, a first stabilization member may be attached between the corner of the airbag and the housing, while a second stabilization member may be attached between the midpoint of the lower edge and the housing.

The airbag system according to the invention also works well for airbag housings having a relatively small sideways extension, e.g. less than 80% of the width of the bonnet or less than 60%.

In an embodiment, the at least one stabilization member has a predetermined length d. The length is chosen, so that it stabilizes the fully deployed airbag without any slack. This is to avoid that the deployed airbag might move sideways, before the stabilization member gets active stabilizing, which would be possible with a variable length.

Preferably, the stabilization member is made of a sideways flexible material. By sideways flexible material is meant that the stabilization member is yielding when exerted to forces in other directions than the extension direction of the stabilization member attached to the fully deployed airbag. However, in the extension direction, the stabilization member may be inflexible and instead have a predetermined length d, as described above. By making the stabilization members of sideways flexible materials, the risk of hurting a pedestrian/ cyclist possibly landing on a stabilization member is reduced, since the stabilization member will just bend or give way.

Suitable materials for the stabilization members are textile, plastics and/ or a metal wire. They may also be of the same material as the airbag itself.

The at least one stabilization member connects a lower edge of the airbag outside of the inflating channel to the housing or to the vehicle for providing sideways stabilization. The lower edge is the edge of the lower region. By connecting to the lower edge instead of anywhere in the lower region, the stabilization member may be made shorter. It is usually also easier to manufacture an airbag system, wherein the stabilization member is connected to the edge itself instead of to anywhere in the lower region. The stabilization member may for example be incorporated into the seam enclosing the airbag.

The stabilization member may be attached at any lateral position between the corner of the deployed airbag and the inflating channel. The stabilization member may be connected to the lower region of the airbag at a distance from the centre line of the airbag being at least 30%, preferably at least 50% and most preferably at least 90% of the lateral extension w of the deployed airbag. The lateral extension w is defined as the distance from the centre line of the airbag to the outmost point of the deployed airbag, i.e. the point having the largest perpendicular distance to the centre line. Since the inflating channel anyway connects the airbag to the housing, it is no use to have a stabilization member there.

The stabilization member is connected to the lower edge of the airbag at a distance from the centre line of the airbag being at least 90% of the lateral extension w of the deployed airbag.

By locating the attachment of the stabilization member to the lower region of the airbag, or as an option to the lower edge, it is possible to attach the stabilization member in the vicinity of the corner of the airbag, which is advantageous for preventing that the airbag would place itself on top of the bonnet at the rear corners of the bonnet.

The at least one stabilization member may comprise a strap and/or comprise a sail and/ or form an integral part of the airbag. The strap, sail or integral part of the airbag may be inflatable as well, such that they are inflated at the same time as the airbag. The sails or the integral part of the airbag may further be integrated with the inflating channel.

During normal conditions, the inflatable airbag is stored in the housing below the bonnet of the vehicle. In an embodiment, the at least one stabilization member may be stored together with the airbag in the housing and be pulled out of the housing during deployment of the airbag. This is for example an advantageous configuration when the other end of the stabilization member is attached to the housing. When the stabilization member is incorporated into the airbag module, the integration of the airbag system in the vehicle is facilitated as compared to a conventional airbag system. The airbag system with the stabilization member incorporated into the airbag module according to the invention is further easier to mount than a conventional airbag system. The airbag system may be sold and used as a spare part. The stabilization member will also be more protected from outer influence, such as moisture, wear, UV radiation etc, if it is stored in the housing.

In an embodiment, the at least one stabilization member forms one single unit. This configuration reduces the risk that the stabilization member is tangled during deployment.

In an alternative embodiment the at least one stabilization member is connected to the vehicle or housing by means of an extension arm. This configuration may for instance be used when the housing has a small lateral extension in order to move the attachment point of the stabilization member laterally outwards.

The extension arm may be extensible. It could be stored in an unextended condition and be extended upon initiation of the deployment of the airbag. The extension arm may be telescopic and extend like a telescope. It could also be folded and be extended by means of unfolding. As an alternative, the extension arm may be permanently extended, but this is less favourable, since it will make it more difficult to integrate the airbag system in the vehicle.

In a second aspect of the present invention there is provided a use of at least one stabilization member for sideways stabilization of a deploying/ deployed airbag of a vehicle, wherein the at least one stabilization member connects a lower edge of the airbag outside of an inflating channel to a housing for storing the airbag or to the vehicle itself. The stabilization member may be of any above-mentioned kind.

The at least one stabilization member may further be used for preventing sideways swaying of the deployed airbag.

In a third aspect of the present invention there is provided a use of at least one stabilization member for pulling back a deployed airbag of a vehicle, wherein the at least one stabilization member connects a lower edge of the airbag outside of an inflating channel to a housing for storing the airbag or to the vehicle itself. The stabilization member may be of any above-mentioned kind. Pulling back the airbag means to pull it back in order to remove it at least partly from the windscreen. Preferably, the gas of the airbag is let out of the airbag before or during pulling it back.

### BRIEF DESCRIPTION OF THE DRAWINGS

The present invention will hereinafter be further explained by means of non-limiting examples with reference to the appended figures wherein:
- Fig. 1: shows a schematic overview of a vehicle equipped with an inflatable airbag after deployment of the airbag according to a first embodiment of the invention;
- Fig. 2: shows the airbag module of Figure 1;
- Fig. 3: shows an airbag module according to a second embodiment of the invention;

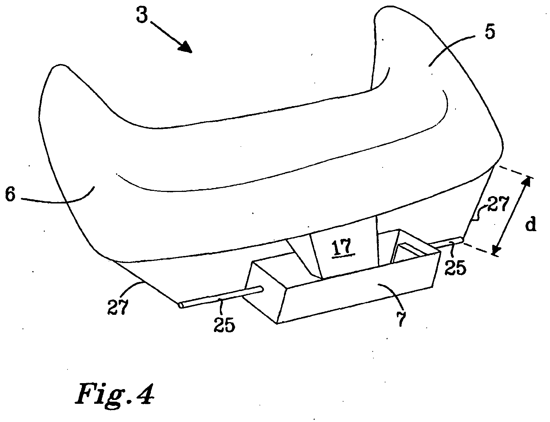

- Fig. 4: shows an airbag module according to a third embodiment of the invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other.

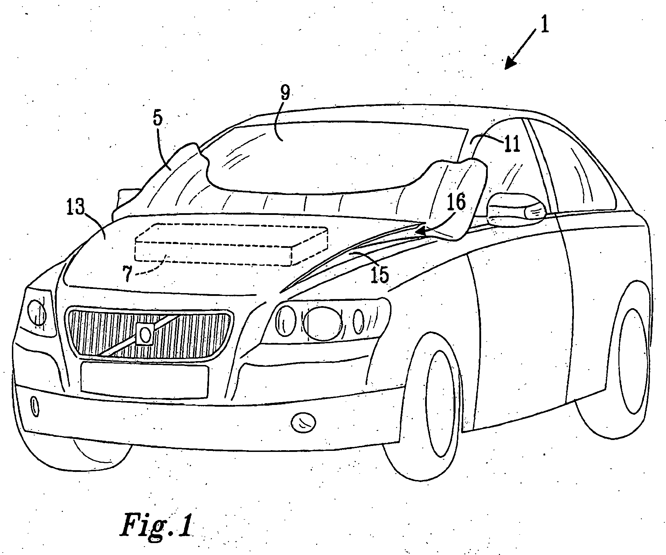

Figure 1 is a schematic overview of a vehicle 1 equipped with an airbag system 3. An airbag 5 is stored in a housing 7 during normal conditions. However, when a sensor system (not illustrated) in the vehicle detects a potential collision risk with for example a pedestrian or cyclist, the airbag 5 is deployed, i.e. inflated, as seen in the Figure 1. The purpose of the deployed airbag is to prevent the pedestrian/ cyclist from directly hitting the windscreen 9 and/or the A-pillars 11 of the vehicle. Instead the pedestrian/ cyclist impacts with the much softer airbag. Moreover, the same sensor system may also be used to initiate a deployment of the bonnet 13, i.e. rising the rear end of the bonnet 13. Thereby a clearance is provided between the bonnet 13 and the engine compartment 15, which also helps to minimize the impact forces on the pedestrian/ cyclist. The airbag deploys through the rear bonnet opening 16, which results from raising the rear end of the bonnet 13. The bonnet 13 is in American English often called the hood.

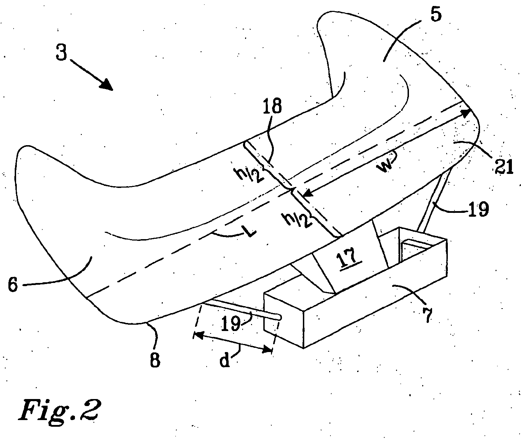

In Figure 2 a more detailed view of an airbag system 3 according to a first embodiment of the invention is illustrated with the airbag 5 in its deployed state. The deployed airbag 5 is connected to the housing 7 by means of an inflating channel 17, through which the airbag 5 was inflated. The deployed airbag 5 has a lateral extension w. The lateral extension w is defined as the distance from the centre line 18 of the airbag 5 to the outmost point of the deployed airbag 5, i.e. the point having the largest perpendicular distance to the centre line 18. The lower region is the region of the deployed airbag situated below an imaginary line L in lateral direction going through the deployed airbag at half of its height h at the centre line 18. In the illustrated embodiment, stabilization members, having the length d, here in the form of straps 19, are attached between the lower edge 8 of the airbag 5 outside of the inflating channel 17 and the housing 7. Alternatively, the lower edge 8 of the airbag 5 may be connected to the bonnet 13, the plenum area or to a localization in the engine compartment 15 via the stabilization members 19.

During normal conditions, the inflatable airbag 5 is stored in the housing 7 below the bonnet 13 of the vehicle 1. The straps 19 may be folded and stored together with the airbag 5 in the housing 7.

In case the pedestrian/cyclist impacts with the airbag 5, and especially if the/she hits at an oblique angle, the stabilization members 19 will keep the airbag 5 in the intended position, wherein it protects at least partly the windscreen 9 and/or the A-pillars 11 of the vehicle. If no stabilization members 19 were used, the airbag 5 would risk being pushed out of position. The stabilization members 19 are further useful during deployment of the airbag 5 in order to facilitate the deployment in the desired direction. The stabilization members 19 also prevent the airbag 5 from riding up on the bonnet 13. Especially, if the stabilization members 19 are attached to the airbag 5 in the vicinity of the corners 21, which is possible according to the present invention, it may be prevented that the airbag would place itself on top of the bonnet 13 at the rear corners of the bonnet 13.

Moreover, the stabilization members 19 may also be used for another purpose: After deployment, the airbag 5 covers part of the windscreen and thus obstructs the field of view for the driver of the vehicle. The stabilization members 19 may then be used to pull back the airbag 5, in order to remove it at least partly from the windscreen.

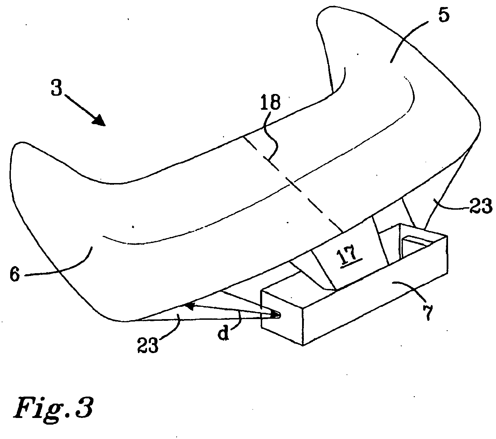

Figure 3 illustrates a second embodiment of the invention. Stabilization members 19, here in the form of sails 23, connect the lower edge of the airbag 5 to the housing 7. The sails 23 may be attached to the airbag 5 or form an integral part of the airbag 5. The sails 23 may be inflatable as well. During normal conditions, the inflatable airbag 5 is stored in a housing 7 below the bonnet 13 of the vehicle 1 together with the sails 23. As an option (not illustrated), the sails 23 may be integrated with the inflating channel 17, e.g. at the sides of the inflating channel 17, but in that case the sails 23 are normally not inflatable. For a sail 23, the length d of the stabilization member is measured along the midline.

According to a third embodiment, the stabilization members, exemplified by metal wires 27, are connected via extension arms 25 to the housing 7 or vehicle 1. During normal conditions, the extension arms 25 are stored in an unextended condition, either inside or outside the housing 7. However, during the deployment of the airbag 5, the extension arms 25 are extended, so that they can keep the deployed airbag 5 in place.

Further modifications of the invention within the scope of the appended claims are feasible. As such, the present invention should not be considered as limited by the embodiments and figures described herein. Rather, the full scope of the invention should be determined by the appended claims, with reference to the description and drawings.

Especially, even if the illustrated embodiments show stabilization members 19, 23, 27 connected at one end to the housing 7, they may instead be connected to the bonnet 13 or to a localization in the engine compartment 15 or in the plenum area. Any of the illustrated stabilization members, being a strap 19, a sail 23 or a wire 27, may use any configuration of attachment mentioned above.

## Claims

1. An airbag system (3) for a vehicle (1) comprising
- an inflatable airbag (5), adapted to be deployed along the windscreen (9) and/ or A-pillars (11) of said vehicle (1),
- a housing (7) adapted to store said airbag (5), said housing (7) intended to be located below a bonnet (13) of said vehicle (1),
- at least one stabilization member (19, 23, 27),
said inflatable airbag (5) being connected to the housing (7) by means of an inflating channel (17),
said at least one stabilization member (19, 23, 27) being adapted to connect a lower region (6) of said airbag (5) outside of said inflating channel (17) to said housing (7) or to said vehicle (1) for providing sideways stabilization,
said at least one stabilization member (19, 23, 27) being directly attached to said lower region (6) of said airbag (5),
said lower region being the region of the deployed airbag (5) situated below an imaginary line L in lateral direction going through the deployed airbag at half of its height (h) at the centre line (18) along the windscreen (9),
**characterized in that**
said at least one stabilization member (19, 23, 27) is adapted to connect a lower edge (8) of said airbag (5) outside of said inflating channel (17) to said housing (7) or to said vehicle (1), said at least one stabilization member (19, 23, 27) being incorporated into a seam enclosing said airbag (5), wherein said at least one stabilization member (19, 23, 27) is connected to said lower region at a distance from the centre line (18) of said airbag (5) being at least 90% of the lateral extension (w) of said airbag (5).

2. The airbag system (3) according to claim 1, wherein said at least one stabilization member (19, 23, 27) has a predetermined length (d).

3. The airbag system (3) according to any preceding claim, wherein said stabilization member (19, 23, 27) is made of a sideways flexible material.

4. The airbag system (3) according to claim 3, wherein said at least one stabilization member (19, 23, 27) is attached between said lower edge (8) of said airbag (5) outside of said inflating channel (17) and said housing (7).

5. The airbag system (3) according to any preceding claim, wherein said at least one stabilization member (19, 23, 27) is attached to said airbag (5) in the vicinity of a corner (21) of said airbag (5).

6. The airbag system (3) according to any preceding claim, wherein said at least one stabilization member (19, 23, 27) comprises a strap (19) and/ or comprises a sail (23) and/ or forms an integral part of said airbag (5).

7. The airbag system (3) according to any preceding claim, wherein said at least one stabilization member (19, 23, 27) is stored together with said airbag (5) in said housing (7), and is pulled out of said housing (7) during deployment of said airbag (5).

8. The airbag system (3) according to any preceding claim, wherein said at least one stabilization member (19, 23, 27) forms one single unit.

9. The airbag system (3) according to any of claims 1-7, wherein said at least one stabilization member (19, 23, 27) is connected to said vehicle (1) or housing (7) by means of an extension arm (25).

10. The airbag system (3) according to claim 9, wherein said extension arm (25) is extensible, said extension arm (25) being stored in an unextended condition and being extended upon initiation of the deployment of said airbag (5).

11. The airbag system (3) according to any preceding claim, wherein one end of said at least one stabilization member (19, 23, 27) is connected to said airbag (5).

12. A use of at least one stabilization member (19, 23, 27) for sideways stabilization of a deploying/ deployed airbag (5) of a vehicle (1),
said at least one stabilization member (19, 23, 27) connects a lower region (6) of said airbag (5) outside of an inflating channel (17) to a housing (7) for storing said airbag (5) or to said vehicle (1) itself, said at least one stabilization member (19, 23, 27) being directly attached to said lower region (6) of said airbag (5),
said lower region being the region of the deployed airbag (5) situated below an imaginary line L in lateral direction going through the deployed airbag at half of its height (h) at the centre line (18) along the windscreen (9),
**characterized in that**
said at least one stabilization member (19, 23, 27) is adapted to connect a lower edge (8) of said airbag (5) outside of said inflating channel (17) to said housing (7) or to said vehicle (1), said at least one stabilization member (19, 23, 27) being incorporated into a seam enclosing said airbag (5), wherein said at least one stabilization member (19, 23, 27) is connected to said lower region at a distance from the centre line (18) of said airbag (5) being at least 90% of the lateral extension (w) of said airbag (5).

13. The use according to claim 12 further used for preventing sideways swaying.

14. A use of at least one stabilization member (19, 23, 27) for pulling back a deployed airbag (5) of a vehicle (1),
said at least one stabilization member (19, 23, 27) connects a lower region (6) of said airbag (5) outside of an inflating channel (17) to a housing (7) for storing said airbag (5) or to said vehicle (1) itself, said at least one stabilization member (19, 23, 27) being directly attached to said lower region (6) of said airbag (5),
said lower region being the region of the deployed airbag (5) situated below an imaginary line L in lateral direction going through the deployed airbag at half of its height (h) at the centre line (18) along the windscreen (9),
**characterized in that**
said at least one stabilization member (19, 23, 27) is adapted to connect a lower edge (8) of said airbag (5) outside of said inflating channel (17) to said housing (7) or to said vehicle (1), said at least one stabilization member (19, 23, 27) being incorporated into a seam enclosing said airbag (5), wherein said at least one stabilization member (19, 23, 27) is connected to said lower region at a distance from the centre line (18) of said airbag (5) being at least 90% of the lateral extension (w) of said airbag (5).

## Patentansprüche

1. Airbagsystem (3) für ein Fahrzeug (1), das Folgendes umfasst:
- einen aufblasbaren Airbag (5), der ausgebildet ist, um entlang der Windschutzscheibe (9) und/oder der A-Säulen (11) des Fahrzeugs (1) ausgelöst zu werden,
- ein Gehäuse (7), das ausgebildet ist, um darin den Airbag (5) zu lagern, wobei das Gehäuse (7) dafür vorgesehen ist, unterhalb einer Haube (13) des Fahrzeugs (1) angeordnet zu werden,
- mindestens ein Stabilisierungselement (19, 23, 27),
wobei der aufblasbare Airbag (5) mittels eines Aufblaskanals (17) mit dem Gehäuse (7) verbunden ist,
wobei das mindestens eine Stabilisierungselement (19, 23, 27) so ausgebildet ist, dass ein unterer Bereich (6) des Airbags (5) außerhalb des Aufblaskanals (17) mit dem Gehäuse (7) oder mit dem Fahrzeug (1) verbunden ist, um für eine seitliche Stabilisierung zu sorgen,
wobei das mindestens eine Stabilisierungselement (19, 23, 27) direkt am unteren Bereich (6) des Airbags (5) befestigt ist,
der sich unterhalb einer gedachten Linie L befindet, die in seitlicher Richtung durch den ausgelösten Airbag (5) auf der Hälfte seiner Höhe (h) an der Mittellinie (18) entlang der Windschutzscheibe (9) verläuft,
**dadurch gekennzeichnet, dass**
das mindestens eine Stabilisierungselement (19, 23, 27) so ausgeführt ist, dass eine untere Kante (8) des Airbags (5) außerhalb des Aufblaskanals (17) mit dem Gehäuse (7) oder dem Fahrzeug (1) verbunden ist, wobei das mindestens eine Stabilisierungselement (19, 23, 27) in eine den Airbag (5) einfassende Naht eingegliedert ist, wobei das mindestens eine Stabilisierungselement (19, 23, 27) mit dem unteren Bereich in einer Distanz von der Mittellinie (18) des Airbags (5) verbunden ist, die mindestens 90% der seitlichen Erstreckung (w) des Airbags (5) beträgt.

2. Airbagsystem (3) nach Anspruch 1, bei dem das mindestens eine Stabilisierungselement (19, 23, 27) eine vorbestimmte Länge (d) hat.

3. Airbagsystem (3) nach einem der vorstehend aufgeführten Ansprüche, bei dem das Stabilisierungselement (19, 23, 27) aus einem seitlich flexiblen Material besteht.

4. Airbagsystem (3) nach Anspruch 3, bei dem das mindestens eine Stabilisierungselement (19, 23, 27) zwischen der unteren Kante (8) des Airbags (5) außerhalb des Aufblaskanals (17) und dem Gehäuse (7) befestigt ist.

5. Airbagssystem (3) nach einem der vorstehend aufgeführten Ansprüche, bei dem das mindestens eine Stabilisierungselement (19, 23, 27) in der Nähe einer Ecke (21) des Airbags (5) am Airbag (5) befestigt ist.

6. Airbagsystem (3) nach einem der vorstehend aufgeführten Ansprüche, bei dem das mindestens eine Stabilisierungselement (19, 23, 27) ein Band (19) und/oder ein Segel (23) umfasst und/oder ein integraler Bestandteil des Airbags (5) ist.

7. Airbagsystem (3) nach einem der vorstehend aufgeführten Ansprüche, bei dem das mindestens eine Stabilisierungselement (19, 23, 27) zusammen mit dem Airbag (5) im Gehäuse (7) gelagert ist und während des Auslösens des Airbags (5) aus dem Gehäuse (7) herausgezogen wird.

8. Airbagsystem (3) nach einem der vorstehend aufgeführten Ansprüche, bei dem das mindesten eine Stabilisierungselement (19, 23, 27) eine einzelne Einheit bildet.

9. Airbagsystem (3) nach einem der Ansprüche 1 bis 7, bei dem das mindestens eine Stabilisierungselement (19, 23, 27) mittels eines Verlängerungsarms (25) mit dem Fahrzeug (1) oder dem Gehäuse (7) verbunden ist.

10. Airbagsystem (3) nach Anspruch 9, bei dem der Verlängerungsarm (25) verlängerbar ist, wobei der Verlängerungsarm (25) in einem nicht verlängerten Zustand gelagert ist und bei Einleitung des Auslösens des Airbags (5) verlängert wird.

11. Airbagsystem (3) nach einem der vorstehend aufgeführten Ansprüche, bei dem ein Ende des mindestens einen Stabilisierungselements (19, 23, 27) mit dem Airbag (5) verbunden ist.

12. Verwendung von mindestens einem Stabilisierungselement (19, 23, 27) zur seitlichen Stabilisierung eines sich auslösenden/ausgelösten Airbags (5) eines Fahrzeugs (1),
wobei das mindestens eine Stabilisierungselement (19, 23, 27) einen unteren Bereich (6) des Airbags (5) außerhalb eines Aufblaskanals (17) mit einem Gehäuse (7) zum Lagern des Airbags (5) oder mit dem Fahrzeug (1) selbst verbindet, wobei das mindestens eine Stabilisierungselement (19, 23, 27) direkt am unteren Bereich (6) des Airbags (5) befestigt ist,
wobei der untere Bereich der Bereich des ausgelösten Airbags (5) ist, der sich unterhalb der gedachten Linie L befindet, die in seitlicher Richtung durch den ausgelösten Airbag auf der Hälfte seiner Höhe (h) an der Mittellinie (18) entlang der Windschutzscheibe (9) verläuft,
**dadurch gekennzeichnet, dass**
das mindestens eine Stabilisierungselement (19, 23, 27) so ausgeführt ist, dass eine untere Kant (8) des Airbags (5) außerhalb des Aufblaskanals (17) mit dem Gehäuse (7) oder dem Fahrzeug (1) verbunden ist, wobei das mindestens eine Stabilisierungselement (19, 23, 27) in eine den Airbag (5) einfassende Naht eingegliedert ist, wobei das mindestens eine Stabilisierungselement (19, 23, 27) mit dem unteren Bereich in einer Distanz von der Mittellinie (18) des Airbags (5) verbunden ist, die mindestens 90% der seitlichen Erstreckung (w) des Airbags (5) beträgt.

13. Verwendung nach Anspruch 12, um weiterhin ein seitliches Verschieben zu verhindern.

14. Verwendung von mindestens einem Stabilisierungselement (19, 23, 27), um einen ausgelösten Airbag (5) eines Fahrzeugs (1) zurückzuziehen,
wobei das mindestens eine Stabilisierungselement (19, 23, 27) einen unteren Bereich (6) des Airbags (5) außerhalb des Aufblaskanals (17) mit einem Gehäuse (7) zum Lagern des Airbags (5) oder mit dem Fahrzeug (1) selbst verbindet, wobei das mindestens eine Stabilisierungselement (19, 23, 27) direkt am unteren Bereich (6) des Airbags (5) befestigt ist,
wobei der untere Bereich der Bereich des ausgelösten Airbags (5) ist, der sich unterhalb einer gedachten Linie L befindet, die in seitlicher Richtung durch den ausgelösten Airbag auf der Hälfte seiner Höhe (h) an der Mittellinie (18) entlang der Windschutzscheibe (9) verläuft,
**dadurch gekennzeichnet, dass**
das mindestens eine Stabilisierungselement (19, 23, 27) so ausgebildet ist, dass eine untere Kante (8) des Airbags (5) außerhalb des Aufblaskanals (17) mit dem Gehäuse (7) oder dem Fahrzeug (1) verbunden ist, wobei das mindestens eine Stabilisierungselement (19, 23, 27) in eine den Airbag (5) einfassende Naht eingegliedert ist, wobei das mindestens eine Stabilisierungselement (19, 23, 27) mit dem unteren Bereich in einer Distanz von der Mittellinie (18) des Airbags (5) verbunden ist, die mindestens 90% der seitlichen Erstreckung (w) des Airbags (5) beträgt.

## Revendications

1. Système d'airbag (3) pour un véhicule (1) comprenant :
- un airbag gonflable (5) prévu pour être déployé le long du pare-brise (9) et/ou des colonnes A (11) dudit véhicule (1),
- un boîtier (7) prévu pour stocker ledit airbag (5), ledit boîtier étant destiné à être disposé sous un capot (13) dudit véhicule (1),
- au moins un organe stabilisateur (19, 23, 27),
ledit airbag gonflable (5) étant connecté au boîtier (7) au moyen d'un canal de gonflage (17),
ledit au moins un organe stabilisateur (19, 23, 27) étant prévu pour relier une région inférieure (6) dudit airbag (5) située à l'extérieur dudit canal de gonflage (17) audit boîtier (7) ou audit véhicule (1) pour assurer une stabilisation latérale,
ledit au moins un organe stabilisateur (19, 23, 27) étant attaché directement à ladite région inférieure (6) dudit airbag (5),
ladite région inférieure étant la région de l'airbag déployé (5) située en dessous d'une ligne imaginaire L dans la direction latérale, passant à travers l'airbag déployé au niveau de la moitié de sa hauteur (h) mesurée sur l'axe central (18) le long du pare-brise (9),
**caractérisé en ce que :**
ledit au moins un organe stabilisateur (19, 23, 27) est prévu pour relier un bord inférieur (8) dudit airbag (5) situé à l'extérieur dudit canal de gonflage (17) audit boîtier (7) ou audit véhicule (1), ledit au moins un organe stabilisateur (19, 23, 27) étant incorporé à un joint fermant ledit airbag (5), dans lequel ledit au moins un organe stabilisateur (19, 23, 27) est raccordé à ladite région inférieure à une distance de l'axe central (18) dudit airbag (5) qui est d'au moins 90 % de l'extension latérale (w) dudit airbag (5).

2. Système d'airbag (3) selon la revendication 1, dans lequel ledit au moins un organe stabilisateur (19, 23, 27) présente une longueur prédéterminée (d).

3. Système d'airbag (3) selon l'une quelconque des revendications précédentes, dans lequel ledit organe stabilisateur (19, 23, 27) est fabriqué en un matériau à flexibilité latérale.

4. Système d'airbag (3) selon la revendication 3, dans lequel ledit au moins un organe stabilisateur (19, 23, 27) est attaché entre ledit bord inférieur (8) dudit airbag (5) situé à l'extérieur dudit canal de gonflage (17) et ledit boîtier (7).

5. Système d'airbag (3) selon l'une quelconque des revendications précédentes, dans lequel ledit au moins un organe stabilisateur (19, 23, 27) est attaché audit airbag (5) à proximité d'un coin (21) dudit airbag (5).

6. Système d'airbag (3) selon l'une quelconque des revendications précédentes, dans lequel ledit au moins un organe stabilisateur (19, 23, 27) comprend une bande (19) et/ou comprend une voile (23) et/ou fait partie intégrante dudit airbag (5).

7. Système d'airbag (3) selon l'une quelconque des revendications précédentes, dans lequel ledit au moins un organe stabilisateur (19, 23, 27) est stocké conjointement avec ledit airbag (5) dans ledit boîtier (7), et est sorti dudit boîtier (7) au cours du déploiement dudit airbag (5).

8. Système d'airbag (3) selon l'une quelconque des revendications précédentes, dans lequel ledit au moins un organe stabilisateur (19, 23, 27) forme une unité d'une seule pièce.

9. Système d'airbag (3) selon l'une quelconque des revendications 1 à 7, dans lequel ledit au moins un organe stabilisateur (19, 23, 27) est relié audit véhicule (1) ou audit boîtier (7) au moyen d'un bras d'extension (25).

10. Système d'airbag (3) selon la revendication 9, dans lequel ledit bras d'extension (25) est extensible, ledit bras d'extension (25) étant stocké dans un état non étendu et étant étendu au cours de l'amorçage du déploiement dudit airbag (5).

11. Système d'airbag (3) selon l'une quelconque des revendications précédentes, dans lequel une extrémité dudit au moins un organe stabilisateur (19, 23, 27) est reliée audit airbag (5).

12. Utilisation d'au moins un organe stabilisateur (19, 23, 27) pour la stabilisation latérale d'un airbag (5) d'un véhicule (1) se déployant/déployé,
ledit au moins un organe stabilisateur (19, 23, 27) reliant une région inférieure (6) dudit airbag (5) située à l'extérieur d'un canal de gonflage (17) à un boîtier (7) pour stocker ledit airbag (5) ou audit véhicule (1) lui-même, ledit au moins un organe stabilisateur (19, 23, 27) étant attaché directement à ladite région inférieure (6) dudit airbag (5),
ladite région inférieure étant la région de l'airbag déployé (5) située en dessous d'une ligne imaginaire L dans la direction latérale traversant l'airbag déployé au niveau de la moitié de sa hauteur (h) mesurée sur l'axe central (18) le long du pare-brise (9),
**caractérisée en ce que :**
ledit au moins un organe stabilisateur (19, 23, 27) est prévu pour relier un bord inférieur (8) dudit airbag (5) situé à l'extérieur dudit canal de gonflage (17) audit boîtier (7) ou audit véhicule (1), ledit au moins un organe stabilisateur (19, 23, 27) étant incorporé à un joint enfermant ledit airbag (5), dans lequel ledit au moins un organe stabilisateur (19, 23, 27) est raccordé à ladite région inférieure à une distance de l'axe central (18) dudit airbag (5) qui est d'au moins 90 % de l'extension latérale (w) dudit airbag (5).

13. Utilisation selon la revendication 12 utilisée en outre pour empêcher une dérivation latérale.

14. Utilisation d'au moins un organe stabilisateur (19, 23, 27) pour retirer un airbag déployé (5) d'un véhicule (1),
ledit au moins un organe stabilisateur (19, 23, 27) reliant une région inférieure (6) dudit airbag (5) située à l'extérieur d'un canal de gonflage (17) à un boîtier (7) pour stocker ledit airbag (5) ou audit véhicule (1) lui-même, ledit au moins un organe stabilisateur (19, 23, 27) étant attaché directement à ladite région inférieure (6) dudit airbag (5),
ladite région inférieure étant la région de l'airbag déployé (5) située en dessous d'une ligne imaginaire L dans la direction latérale passant à travers l'airbag déployé au niveau de la moitié de sa hauteur (h) mesurée sur l'axe central (18) le long du pare-brise (9),
**caractérisée en ce que :**
ledit au moins un organe stabilisateur (19, 23, 27) est prévu pour relier un bord inférieur (8) dudit airbag (5) situé à l'extérieur dudit canal de gonflage (17) audit boîtier (7) ou audit véhicule (1), ledit au moins un organe stabilisateur (19, 23, 27) étant incorporé à un joint enfermant ledit airbag (5), dans lequel ledit au moins un organe stabilisateur (19, 23, 27) est raccordé à ladite région inférieure à une distance de l'axe central (18) dudit airbag (5) qui est d'au moins 90 % de l'extension latérale (w) dudit airbag (5).
